# NEUE EUROPÄISCHE PATENTSCHRIFT

(11) **EP 3 135 086 B2**
(45) Veröffentlichungstag und Bekanntmachung des Hinweises auf die Entscheidung über den Einspruch: **15.12.2021**
(45) Hinweis auf die Patenterteilung: 03.10.2018
(21) Anmeldenummer: 16401040.7
(22) Anmeldetag: 11.07.2016
(51) Int. Cl.: A01B 79/00, A01B 61/00

(54) **BODENBEARBEITUNGSGERÄT UND VERFAHREN ZUR ERSTELLUNG EINER BODENKARTE MIT EINEM DERARTIGEN BODENBEARBEITUNGSGERÄT**
SOIL CULTIVATION DEVICE AND METHOD FOR CREATING A SOIL MAP WITH SUCH A SOIL CULTIVATION DEVICE
APPAREIL DE TRAVAIL DES SOLS ET PROCEDE DE PRODUCTION D'UNE CARTE PEDOLOGIQUE COMPRENANT UN TEL APPAREIL DE TRAVAIL DES SOLS

(30) Priorität: 16.07.2015 DE 102015111518
(43) Veröffentlichungstag der Anmeldung: 01.03.2017
(73) Patentinhaber: Amazonen-Werke H. Dreyer SE & Co. KG, 49205 Hasbergen (DE)
(72) Erfinder: Schlüter, Tim, 49078 Osnabrück (DE)
(74) Vertreter: Grünecker Patent- und Rechtsanwälte PartG mbB

(56) Entgegenhaltungen:
- EP-A1- 1 273 216
- EP-A1- 2 529 610
- EP-B1- 0 749 677
- WO-A2-2006/015463
- WO-A2-2014/026183
- DE-A1-102004 054 749
- DE-C2- 4 232 067
- US-A- 5 902 343
- US-A- 6 041 582
- US-A1- 2003 009 286
- US-B1- 6 608 672
- US-B2- 6 834 550
- US-B2- 7 028 551
- US-B2- 8 204 689

## Beschreibung

Die Erfindung betrifft ein Bodenbearbeitungsgerät gemäß dem Oberbegriff des Patentanspruches 1 sowie ein Verfahren zur Erstellung einer Bodenkarte mit einem derartigen Bodenbearbeitungsgerät.

Aus der DE 42 32 067 C2 ist bereits ein Bodenbearbeitungsgerät bekannt, bei dem eine Überlastsicherung für dessen Bodenbearbeitungswerkzeug einen Sensor zur Registrierung der Relativstellung des Bodenbearbeitungswerkzeuges aufweist, wobei mit dem Sensor eine Drucksteuerung in Wirkverbindung steht und ein Mikroprozessor vorhanden ist, der dafür sorgt, dass eine Minimierung der Relativbewegungen des Bodenbearbeitungswerkzeuges als Reaktion auf unterschiedliche Bodenwiderstände erreichbar ist. Bei dem in dieser Druckschrift offenbarten Bodenbearbeitungswerkzeug handelt es sich um einen Pflug, der entgegen einer durch einen Hydraulikzylinder erzeugten Vorspannkraft um ein Gelenk verschwenkbar ausgeführt ist, sodass das Bodenbearbeitungswerkzeug bei normalen Bodenverhältnissen eine gleichmäßige Arbeitspositionen aufweist. Sobald das Bodenbearbeitungswerkzeug jedoch auf einen erhöhten Widerstand trifft, wie er beispielsweise durch Steine oder stark verfestigte Bodenabschnitte entsteht, setzt eine Ausweichbewegung ein, die durch den mit dem Bodenbearbeitungswerkzeug gekoppelten Hydraulikzylinder möglich wird, der das Bodenbearbeitungswerkzeug im Anschluss an die Ausgleichbewegung wieder in seine Arbeitsposition zurückgestellt.

Anders ausgedrückt wird in der DE 42 32 067 C2 eine Überlastsicherung beschrieben, die sich automatisch den jeweiligen Bodenbedingungen anpasst, wobei ein gewisses Maß an Nachgiebigkeit des Bodenbearbeitungswerkzeuges durchaus zulässig ist. Als Sensor kommt hierbei ein Drucksensor oder ein Positionssensor zum Einsatz.

Ein Sensor, der auch als Detektor, Messgrößenaufnehmer oder Messfühler bezeichnet wird, ist ganz allgemein ein technisches Bauteil, das bestimmte physikalische oder chemische Eigenschaften und/oder die stoffliche Beschaffenheit seiner Umgebung qualitativ oder als Messgröße quantitativ erfassen kann. Diese Größen werden in ein weiterverarbeitbares, elektrisches Signal umgeformt. Der Sensor ist damit als der Teil einer Messeinrichtung definiert, der unmittelbar auf eine Messgröße anspricht. Damit ist der Sensor das erste Element einer Messkette. Ein in der DE 42 32 067 C2 beschriebener Drucksensor misst demnach die physikalische Größe Druck (= Kraft pro Fläche) und wandelt diese in eine elektrische Ausgangsgröße als Maß für den Druck um.

Darüber hinaus beschreibt die EP 0 749 677 B1 ein Verfahren zur Ermittlung von Daten über den Zustand einer landwirtschaftlichen Fläche, bei dem der erforderliche Leistungsbedarf eines Bodenbearbeitungsgerätes zu verschiedenen Zeitpunkten erfasst und in Verbindung mit dem jeweiligen Standort des Bodenbearbeitungsgerätes in einer Speichereinheit gespeichert wird. Gemäß dem Offenbarungsgehalt dieser Druckschrift kann dabei der Leistungsbedarf durch Erfassung der Antriebs- und/oder Zugleistung des Bodenbearbeitungsgerätes beziehungsweise durch die Ermittlung der Eindringtiefe oder Drehzahl des Bodenbearbeitungswerkzeuges bestimmt werden. Die ermittelten Daten werden dabei in Intervallen durch neue Messungen ergänzt und/oder aktualisiert. Zur Standortbestimmung des Bodenbearbeitungsgerätes wird ein DGPS-System mittels einer Satellitennavigation genutzt.

Dabei ist allgemein bekannt, dass ein globales Positionsbestimmungssystem (englisch: "global positioning system") oder kurz "GPS" auf Satelliten basiert, die mit codierten Radiosignalen ständig ihre aktuelle Position und die genaue Uhrzeit ausstrahlen. Aus den Signallaufzeiten können spezielle GPS-Empfänger dann ihre eigene Position und Geschwindigkeit berechnen. Theoretisch reichen dazu die Signale von drei Satelliten aus, da daraus die genaue Position und Höhe bestimmt werden kann. In der Praxis haben aber GPS-Empfänger keine Uhr, die genau genug ist, um die Laufzeiten korrekt zu messen. Deshalb wird das Signal eines vierten Satelliten benötigt, mit dem dann auch die genaue Zeit im Empfänger bestimmt werden kann. Mit den GPS-Signalen lässt sich aber nicht nur die Position, sondern auch die Bewegungsrichtung des Empfängers ermitteln.

Die ermittelten Daten werden bei der Lösung nach der EP 0 749 677 B1 über geeignete Datenleitungen auf ein Terminal übertragen, dass die Speichereinheit aufweist. In diesem Zusammenhang erfolgt auch die Zuordnung der erfassten Daten zu dem jeweiligen Standort. Durch diese Art der Datenerfassung soll in einem Folgejahr die Bearbeitung des Bodens gesteuert beziehungsweise geregelt werden oder es besteht die Möglichkeit, ein sich an das Pflügen anschließendes Säen an die Bodenverhältnisse anzupassen.

Die Ermittlung des Leistungsbedarf des Bodenbearbeitungsgerätes führt zu einer verhältnismäßig ungenauen Erfassung der Daten der Bodenfläche. Dies liegt darin begründet, dass beispielsweise bei der Messung der Antriebsleistung auch Werte in die Begutachtung einfließen, die ausschließlich durch das Fahrverhalten des Fahrers verursacht sind, was zu Fehlinterpretationen führen kann. Darüber hinaus ist das in dieser Druckschrift vorgestellte Verfahren auch deshalb verhältnismäßig ungenau, weil lediglich die Position des Bodenbearbeitungsgerätes ermittelt wird, was einer relativ groben Messung entspricht.

Der Erfindung liegt die Aufgabe zugrunde, ein Bodenbearbeitungsgerät bereitzustellen, das eine Kartographie des zu bearbeitenden Bodens mit möglichst hoher Genauigkeit gestattet. Darüber hinaus ist ein Verfahren anzugeben, mit dem die hierfür erforderlichen und gespeicherten Daten nutzbar sind.

Die Aufgabe wird durch ein Bodenbearbeitungsgerät gemäß Anspruch 1 gelöst.

Dabei ist unter dem Mittel zum Datenaustausch mit einem globalen Positionserkennungssystem (GPS) ein Sende-Empfangssystem für GPS-Signale zu verstehen, bei dem es sich beispielsweise um ein Navigationsgerät handeln kann, dessen Signale nicht über eine Sprachsteuerung ausgegeben, sondern als Messsignal im erfindungsgemäßen Sinne gespeichert werden. Der wesentliche Vorteil der Erfindung ist darin zu sehen, dass für die Messung eingesetzte Sensoren unmittelbar an mehreren oder an jedem Bodenbearbeitungswerkzeug angeordnet sind und nicht, wie es bei den zuvor beschriebenen, bekannten Lösungen der Fall ist, an dem Bodenbearbeitungsgerät. Folglich geht der Lösungsgedanke dahin, möglichst an einer großen Vielzahl beziehungsweise sogar an jedem Bodenbearbeitungswerkzeug einen derartigen Sensor vorzusehen. Die Erfassung der von den Sensoren stammenden Messsignale, deren Speicherung in der Speichereinheit und ihre Zusammenführung mit den GPS-Daten ermöglicht folglich eine sehr genaue, detaillierte Kartierung des Bodens. Hierfür werden die Relativpositionen der einzelnen Bodenbearbeitungswerkzeuge zu der GPS-Antenne, welche sich typischerweise auf einem Schleppfahrzeug oder Schlepper befindet, einmalig festgelegt. Befindet sich die GPS-Antenne auf dem Bodenbearbeitungsgerät, können diese Relativpositionen auch bereits in einer Steuereinheit hinterlegt sein. Die Bestimmung der Relativpositionen von Bodenbearbeitungswerkzeug und GPS-Antenne führt zu einer besonders genauen Kartierung der bearbeiteten Fläche.

Durch diese Kartierung wird es ferner möglich, den Boden in Bereiche einzuteilen, die problemlos, mittelmäßig oder schwer zu bearbeiten sind. Zudem kann durch die vorgestellte Lösung eine genaue Positionierung im Boden vorhandener Steine oder anderer Hindernisse erfolgen, so dass dadurch eine Beschädigung des Bodenbearbeitungswerkzeuges wirksam vermieden werden kann, weil beispielsweise im Folgejahr bereits vor dem Erreichen des im Boden befindlichen Hindernisses das Bodenbearbeitungswerkzeug angehoben und damit aus dem Gefahrenbereich entfernt werden kann.

Gemäß einer ersten Ausgestaltung der Erfindung wird vorgeschlagen, dass die von den Sensoren erfassten Messsignale einer auf das Bodenbearbeitungswerkzeug einwirkenden, vorzugsweise am Bodenbearbeitungswerkzeug oder an einem Spannmittel gemessenen Kraft und/oder einer Beschleunigung und/oder einer Geschwindigkeit und/oder einem von dem Bodenbearbeitungswerkzeug beziehungsweise dem Spannmittel zurückgelegten Weg entsprechen.

Anders ausgedrückt können für die erfindungsgemäße Lösung unterschiedliche Sensoren zum Einsatz kommen, was zu einer hohen Flexibilität der Ausführung eines derartigen Bodenbearbeitungsgerätes führt und insgesamt eine starke Vereinfachung und die Möglichkeit von Kostenreduzierungen mit sich bringt.

Ein weiterführender Vorschlag nach der Erfindung geht ferner dahin, dass die Sensoren beispielsweise mechanische, resistive, piezoelektrische, kapazitive, induktive, optische oder magnetische Sensoren sind.

Als Beispiel für einen mechanischen Sensor sei an dieser Stelle ein Manometer genannt.

Ein Beispiel für einen resistiven Sensor, dessen Widerstandsänderung erfasst werden kann, ist beispielsweise ein Dehnungsmessstreifen. Bei der Messung mit einem Dehnungsmessstreifen wird dieser unmittelbar an dem Bodenbearbeitungswerkzeug oder an dem Spannmittel befestigt oder in dieses integriert, wobei die durch Krafteinwirkung eintretende Verformung erfasst wird. Dies hat zur Folge, dass sich der elektrische Widerstand des Dehnungsmessstreifens mit seiner Dehnung ändert, was in eine elektrische Spannung umgewandelt werden kann. Diese elektrische Spannung und damit die Dehnungsänderung ist erfassbar und kann aufgrund der elastischen Eigenschaften des mit dem Dehnungsmessstreifen versehenen Bauteils in einen Kraftmesswert umgerechnet werden.

In einem Piezokeramik-Element als Sensor entsteht hingegen durch die Krafteinwirkung eine Ladungsverteilung, die proportional zur eingeleiteten Kraft ist. Je nach Art des kristallinen Aufbaus des Piezoelements können Druck- oder Scherkräfte gemessen werden. Letztere sind beispielsweise auch mit einer am Bodenbearbeitungswerkzeug angebrachten Scherschraube erfassbar. Zugkräfte können nur mit Vorspannung gemessen werden. Piezoelektrische Kraftaufnehmer sind in der Regel sehr steif ausgelegt und eignen sich auch für die Messung hochdynamischer (je nach Ausführung bis zu 60 kHz) Kräfte.

Ein Beschleunigungssensor ist dem gegenüber ein Sensor, der eine Beschleunigung misst. Dies erfolgt meistens, indem die auf eine Testmasse wirkende Trägheitskraft bestimmt wird. Somit kann zum Beispiel ermittelt werden, ob eine Geschwindigkeitszunahme oder Geschwindigkeitsabnahme stattfindet.

Ein Wegsensor dient hingegen zur Messung des Abstandes zwischen einem Objekt und einem Bezugspunkt oder von Längenänderungen. Dabei wird die Änderung des Weges in ein Einheitssignal umgewandelt, oder an das Steuergerät übermittelt. Andere Begriffe hierfür sind Wegmesssystem, Wegaufnehmer, Abstandssensor, Positionssensor oder Distanzsensor.

Induktiv oder magnetisch wirkende Sensoren bedingen ein sich änderndes Magnetfeld, dessen Änderung von dem Sensor erfasst wird. Als Beispiel für derartige Sensoren sei an dieser Stelle ein Hall-Sensor erwähnt.

Optische Sensoren basieren auf dem Einfluss des sichtbaren oder nicht sichtbaren Lichts, beispielsweise im Infrarotbereich, dessen Änderung in eine elektrische Spannung umgewandelt wird, die wiederum erfassbar ist.

Wie dies zuvor bereits angedeutet wurde, ist es im Sinne der Erfindung, dass jedes von den Sensoren erfasste Messsignal einem dem entsprechenden GPS-Signal zugeordnet und reproduzierbar in der Speichereinheit gespeichert ist. Dies führt beispielsweise dazu, dass unabhängig von dem Ort des Beginns der Bearbeitung einer Bodenfläche zunächst das entsprechende GPS-Signal erfasst wird und mit einem in der Speichereinheit abgelegten Wert für den Widerstand im Boden abgeglichen wird, so dass von dieser Position ausgehend stets exakt die miteinander korrelierenden Werte des Untergrundes zur Verfügung stehen. Wäre eine derartige Zuordnung und Reproduzierbarkeit der Signale nicht gegeben, müsste der Boden immer von demselben Startpunkt ausgehend bearbeitet werden. Durch die Erfindung ist dies nicht erforderlich.

Die Zunahme elektronischer Bauelemente und der für die Datenübertragung erforderlichen Datenleitungen bringt den Nachteil mit sich, dass Beschädigungen an den einzelnen Elementen und insbesondere an den Datenleitungen auftreten können. Um dies zu vermeiden, geht ein sehr vorteilhafter, weiterführender Vorschlag der Erfindung dahin, dass zur Datenübertragung zwischen Messeinrichtung und Sensor und/oder zwischen Messeinrichtung und Speichereinheit und/oder zwischen Messeinrichtung und GPS wenigstens ein kabelfreies Datenübertragungssystem vorhanden ist. Durch die Weglassung der üblicherweise erforderlichen Kabel kann die Störanfälligkeit im Rahmen der Erfindung wesentlich reduziert werden. Als kabellose Systeme seien an dieser Stelle nur beispielhaft Bluetooth, WLAN oder WiFi erwähnt.

In einer vorteilhaften Weiterbildung wird die für den Messvorgang durch den Sensor erforderliche Energie durch einen hierfür zuständigen Generator mittels Energy-Harvesting, vorzugsweise aus Vibrationsenergie und/oder thermischer Energie und/oder Sonnenenergie, gewonnen. Als "Energy Harvesting" (übersetzt: "Energie ernten") bezeichnet man allgemein die Gewinnung kleiner Mengen elektrischer Energie aus Quellen, wie Umgebungstemperatur, Vibrationen oder Luftströmungen für mobile Geräte mit geringer Leistung. Die dafür eingesetzten Strukturen werden auch als Nanogenerator bezeichnet. Durch dieses Verfahren können durch kabelgebundene Stromversorgung oder Batterien gegebene Einschränkungen vermieden werden. Hierdurch kann folglich mittels eines oder mehrerer Generatoren auf dem Bodenbearbeitungsgerät die Energie autark, also unabhängig vom Schleppfahrzeug gewonnen werden. Es ist somit im Sinne der Erfindung, dass mittels des erfindungsgemäßen Bodenbearbeitungsgerätes eine detaillierte Karte der Beschaffenheit der bearbeiteten Fläche erstellt werden kann obwohl keine kabelgebundene Leitung zu dem Schleppfahrzeug zur Datenübertragung und Energieübertragung vorgehalten werden muss.

Das Bodenbearbeitungsgerät kann beispielsweise ein Pflug oder Grubber sein. Die Bodenbearbeitungswerkzeuge dieser Bodenbearbeitungsgeräte werden bei der Bodenbearbeitung sehr stark belastet und bedürfen daher einer Lösung, wie sie vor Beschädigungen geschützt werden können.

Das erfindungsgemäße Verfahren zur Erstellung einer Bodenkarte mit einem Bodenbearbeitungsgerät ist in Anspruch 7 genannt.

Der besondere Vorteil dieses Verfahrens besteht in der periodischen Wiederholung, wobei der Zeitabstand bevorzugt einstellbar ist, so dass durch eine Reduzierung des Zeitabstandes zwischen zwei Messungen die Genauigkeit gesteigert werden kann. Die erfassten Daten der einzelnen Sensoren werden anschließend zusammen mit dem jeweiligen Positionssignal innerhalb der Speichereinheit erfasst und stehen somit für die Bearbeitung des Bodens zu einem späteren Zeitpunkt zur Verfügung. Natürlich besteht dabei auch die Möglichkeit, die Daten aus der Speichereinheit auszulesen und beispielsweise auf mobilen Datenträgern abzulegen. Dies ermöglicht die Verwendung der Daten auch für weitere Bodenbearbeitungsgeräte.

In einer Weiterbildung des Verfahrens werden die Messsignale nur erfasst und gespeichert, sofern die jeweils auf das Bodenbearbeitungswerkzeug einwirkende Kraft und/oder das Drehmoment und/oder der Druck einen Schwellwert überschreitet. Auf diese Weise kann erreicht werden, dass nur solche Messwerte erfasst werden, die potentiell eine zerstörende Wirkung auf das Bodenbearbeitungswerkzeug anzeigen. Es kann hierdurch eine Karte erstellt werden, welche die Position von sich im Boden befindlichen Hindernissen aufweist.

Durch die Erfassung der Sensorsignale und der GPS-Signale und deren funktionale Verknüpfung kann eine Matrix des bearbeiteten Bodens im Sinne einer Karte erstellt werden, die nicht nur die unterschiedlichen Bodenverhältnisse, sondern auch Hindernisse innerhalb des Bodens ausweist. Folglich wird gemäß einer Ausgestaltung des Verfahrens zur Ermittlung der Beschaffenheit des Bodens mittels des Positionssignals und des diesem zugeordneten Messsignals innerhalb der Speichereinheit oder mit Hilfe der Speichereinheit eine kartografische Darstellung des bearbeiteten Bodens erstellt und gespeichert.

Der erforderliche Aufwand für die Erfassung der Bodenstruktur zahlt sich aus, wenn der Boden nach einer erstmaligen Kartierung zu einem Folgezeitpunkt erneut bearbeitet werden muss. Es besteht dann nämlich die Möglichkeit, die in der Speichereinheit gespeicherten Daten einer Messperiode als Referenzdaten für eine zu einem späteren Zeitpunkt mit dem Bodenbearbeitungsgerät durchzuführende Bodenbearbeitung zu nutzen.

Weitere Einzelheiten der Erfindung sind der Beispielsbeschreibung und den Zeichnungen zu entnehmen. Die Zeichnungen zeigen in:
- Fig. 1:: ein Bodenbearbeitungsgerät angehängt an ein Schleppfahrzeug,
- Fig. 2:: eine erste Ausführungsvariante eines Bodenbearbeitungswerkzeuges,
- Fig. 3:: eine zweite Ausführungsvariante eines Bodenbearbeitungswerkzeuges,
- Fig. 4:: eine dritte Ausführungsvariante eines Bodenbearbeitungswerkzeuges,
- Fig. 5:: eine vierte Ausführungsvariante eines Bodenbearbeitungswerkzeuges mit einem Sensor in einer ersten Stellung,
- Fig. 6:: die Ausführungsvariante eines Bodenbearbeitungswerkzeuges aus Fig. 5 in einer zweiten Stellung,
und
- Fig. 7:: eine schematisch stark vereinfachte Darstellung des Prinzips der Erfindung.

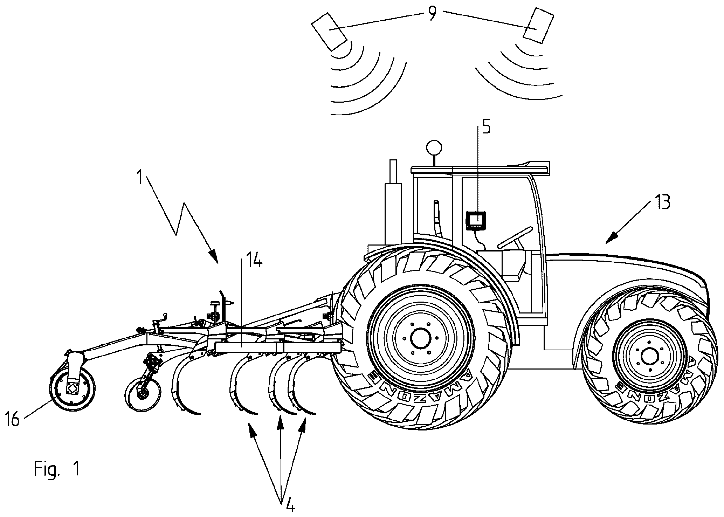

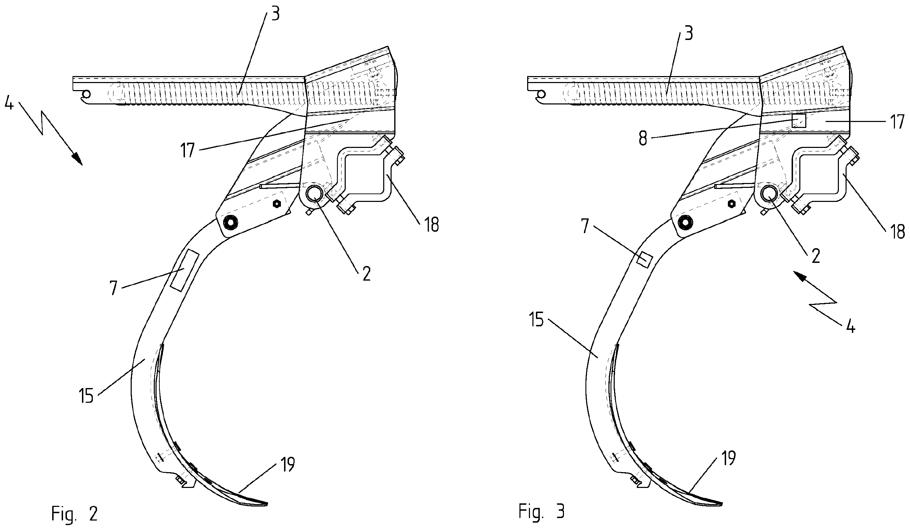

Die Fig. 1 zeigt am Beispiel eines Grubbers ein Bodenbearbeitungsgerät 1, das bei dem dargestellten Beispiel von einem Schleppfahrzeuges 13 gezogen wird. Als Schleppfahrzeug 13 dient hierbei ein Traktor. Das Bodenbearbeitungsgerät 1 besteht im Wesentlichen aus einem Rahmen 14 mit einer Walze 16 an seinem dem Schleppfahrzeug 13 gegenüberliegenden Ende. An der Unterseite des Bodenbearbeitungsgerätes 1 sind mehrere Grubberschare 19, in einer für die Bodenbearbeitung sinnfälligen Weise angeordnet. Die erfindungsgemäße Besonderheit, dass das Bodenbearbeitungsgerät 1 über eine Messeinrichtung 5 verfügt, die einen an dem Bodenbearbeitungswerkzeug 4 angeordneten Sensor 7 oder 8 aufweist, wird nachfolgend im Zusammenhang mit der Beschreibung der Fig. 2 bis 7 eingehender erläutert. Die Fig. 1 zeigt jedoch einen als Display ausgeführten Teil einer Messeinrichtung 5, das dem Fahrer des Schleppfahrzeugs 13 den Verlauf des Messvorganges visualisiert. Darüber hinaus sind in der Fig. 1 andeutungsweise zwei Satelliten dargestellt, die Bestandteile eines globalen Positionserkennungssystems (GPS) 9 sind.

In der Fig. 2 ist eine Werkzeuganordnung eines Grubbers als Beispiel für ein Bodenbearbeitungswerkzeug 4 gezeigt, an dessen unterem Ende ein Grubberschar 19 mit einer als scharfkantige, in den Boden eindringende Spitze ausgeführt ist. Der Scharträger 15 ist um ein Gelenk 2 schwenkbar in einem Flansch 17 aufgenommen und wird mittels der Befestigungsschelle 18 als Baueinheit an der Unterseite des Bodenbearbeitungsgerätes 1 befestigt, wie dies im Zusammenhang mit der Beschreibung der Fig. 1 bereits erläutert wurde. Der Flansch 17 des in Fig. 2 gezeigten Bodenbearbeitungswerkzeuges 4 nimmt ferner ein Spannmittel 3 auf, bei dem es sich im dargestellten Beispiel um eine Zugfeder handelt. Dieses Spannmittel 3 beaufschlagt den Scharträger 15 mit einer Vorspannkraft, die ausreichend ist, eine normale Bodenbearbeitung durchzuführen, ohne dass der Scharträger 15 ausweicht, das heißt, ohne dass dieser um das Gelenk 2 verschwenkt wird. Befinden sich im Boden jedoch sehr stark verfestigte Bestandteile, Steine oder andere Hindernisse, die zu einer Zerstörung des Scharträgers 15 oder des Grubberschars 19 führen könnten, so stellt es einen wesentlichen Vorteil des dargestellten Ausführungsbeispieles dar, dass das Spannmittel 3 in der Lage ist, eine Ausweichbewegung des Scharträgers 15 um das Gelenk 2 zu ermöglichen. Normalerweise weicht der Scharträger 15 erst dann aus, wenn er bei der Bodenbearbeitung unmittelbar mit einem verhärteten Abschnitt des Bodens oder mit einem Stein in Kontakt gerät. Dies kann trotz der ermöglichten Ausweichbewegung zu einer verstärkten Abnutzung oder im schlimmsten Fall auch zu einer Beschädigung des Grubberschars 19 oder des Scharträgers 15 führen. Um dieses Risiko auszuschließen ist an dem Scharträger 15 der Fig. 2 ein Sensor 7 angeordnet, bei dem es sich im dargestellten Beispiel um einen Dehnungsmessstreifen handelt. Wie zuvor bereits ausgeführt wurde, führt die durch Krafteinwirkung eintretende Verformung des Bodenbearbeitungswerkzeuges 4 und die damit einhergehende Dehnung des Dehnungsmessstreifens zu einer Änderung des elektrischen Widerstandes. Die Umwandlung in eine elektrische Spannung ermöglicht die Umrechnung in einen Kraftmesswert, der in einer Speichereinheit 6 gespeichert wird und damit für eine spätere Verwendung jederzeit wieder zur Verfügung steht. Die Erfassung der Position des Bodenbearbeitungswerkzeuges 4 über ein GPS 9 und deren Zuordnung zu dem von dem Sensor 7 erfassten Messwert zu diesem Positionswert erlaubt eine sehr exakte Kartographie des bearbeiteten Bodens.

Aus der Fig. 3 geht eine im Wesentlichen zu der Darstellung in Fig. 2 baugleiche Ausführung eines Bodenbearbeitungswerkzeuges 4 hervor. Im Unterschied zu der Variante in Fig. 2 werden hierbei jedoch zwei Beschleunigungssensoren 7 und 8 eingesetzt. Der erste Beschleunigungssensor 8 wird dabei genutzt, um ein Referenzsignal zu erzeugen, während der zweite Beschleunigungssensor 7 dazu dient, permanent und zeitgleich mit dem über das GPS 9 erfassten Positionssignal die Beschleunigung des Scharträgers 15 zu erfassen. Es kann hierbei ausreichend sein den ersten Beschleunigungssensor 8 nur an einer Stelle der Bodenbearbeitungsmaschine anzubringen und dessen Signal als Referenz für alle zweiten Beschleunigungssensoren 7 zu verwenden. Da alle Schare gleichermaßen am starren Rahmen angelenkt sind, sollte es genügen, das Signal dieses einen Sensors 8 als Referenz zu verwenden. Um eine exaktere Messung zu erreichen, können alternativ beispielsweise auch an mehreren oder allen Flanschen 17 erste Sensoren 8 angebracht werden. Dadurch kann jede Änderung der Position des Scharträgers 15 sehr exakt über die Ermittlung einer Geschwindigkeitszunahme oder Geschwindigkeitsabnahme bestimmt werden.

An dieser Stelle ist anzumerken, dass eine Messung der Belastung der Grubberschar 19 beziehungsweise des Scharträgers 15 auch über eine eingangs bereits näher beschriebene Wegmesseinrichtung erfolgen kann, die beispielsweise an dem Spannmittel 3 angeordnet sein kann, wobei darüber hinaus auch eine Lösung mit einem Seilzug zur Umsetzung der Bewegung des Scharträgers 15 zu dem gleichen Ergebnis führt. Ein derartiger Seilzug kann auch zusätzlich zu dem Spannmittel 3 in dem Flansch 17 verlegt sein.

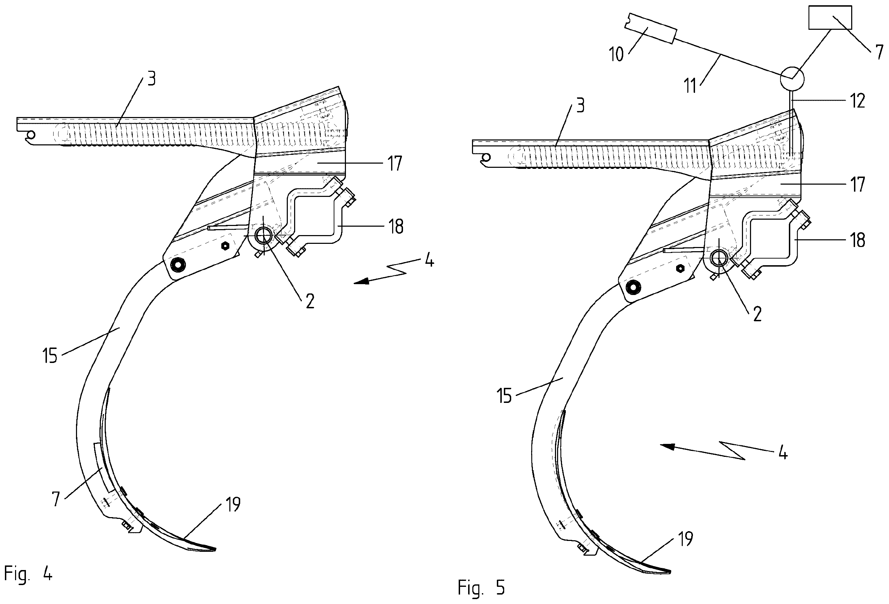

Hinsichtlich der Ausführung des Bodenbearbeitungswerkzeuges 4 muss auch im Zusammenhang mit der Darstellung in Fig. 4 angemerkt werden, dass auch diese Variante weitgehend baugleich zu den bereits zuvor beschriebenen Ausführungen ist. Der Unterschied besteht hierbei in der Verwendung des zum Einsatz kommenden Sensors 7, der an dem Scharträger 15 angebracht ist. Bei dem Ausführungsbeispiel in Fig. 4 handelt es sich um einen Drucksensor und im speziellen Fall um ein Piezokeramik-Element als Sensor 7, in dem durch Krafteinwirkung eine Ladungsverteilung entsteht, die proportional zur eingeleiteten Kraft ist. Diese Ladungsverteilung führt zu einer elektrischen Spannung, die wiederum als Messsignal erfasst und innerhalb der bereits erwähnten Speichereinheit 6 gespeichert werden kann, wobei auch hier die Zuordnung zu dem korrelierenden und über das die GPS 9 erfassten Positionssignal erfolgt.

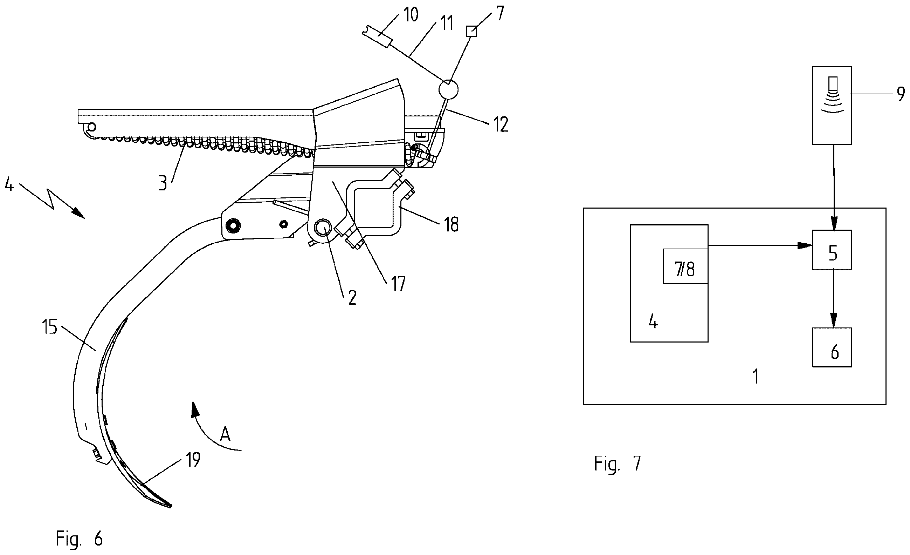

Eine besondere Ausführungsform eines Bodenbearbeitungswerkzeuges 4 mit einem optischen Sensor 7 geht aus den Darstellungen in den Fig. 5 und 6 hervor. Hierbei wird ein Reflektor 12 an dem schwenkbaren Teil des Scharträgers 15 befestigt, der folglich bei Ausweichbewegungen des Scharträgers 15 mitbewegt wird. In der Fig. 5 ist der normale Bearbeitungszustand des Scharträgers 15 gezeigt, bei dem der Reflektor 12 folglich nicht ausgelenkt ist und sich in seiner Neutralstellung befindet. Ein Messwertgeber 10, in Form einer Lichtquelle, sendet permanent oder periodisch ein optisches Signal 11 auf den Reflektor 12, welches nach seiner Reflektion durch den lichtempfindlichen Sensor 7 erfasst wird. Bei dem dargestellten Beispiel ist der Messwertgeber eine Lichtquelle, wobei es sich bei dem optischen Signal 11 um einen Laserstrahl handelt. Als Lichtquelle sind auch andere Quellen EM-Strahlung denkbar, beispielsweise Infrarotquellen. Befindet sich beispielsweise im Boden ein durch das Bodenbearbeitungswerkzeug 4 nicht zerstörungsfrei überwindbarer Stein, so erfolgt eine mit der Bewegung des Scharträgers 15 synchrone Auslenkung des Reflektors 12 in Richtung des Pfeils A in Fig. 6. Diese Änderung der Lage des Reflektor 12 wird messtechnisch ebenfalls erfasst und genauso wie die zuvor bereits gespeicherten Signale in der Speichereinheit 6 abgelegt. Bei einer späteren Verwendung der gespeicherten Werte ist damit im Zusammenhang mit dem über das GPS 9 bestimmten Positionssignal exakt nachvollziehbar, an welcher Stelle des bearbeiteten Bodens sich eine unüberwindbare Passage befindet.

Die Fig. 7 zeigt eine stark vereinfachte Darstellung des Grundprinzips der vorliegenden Erfindung. Danach weist ein Bodenbearbeitungsgerät 1, bei dem es sich beispielsweise um einen Grubber für das Bearbeiten einer Ackerfläche handeln kann, Bodenbearbeitungswerkzeuge 4, also zum Beispiel mehrere Grubberschare 19, auf. An jedem Bodenbearbeitungswerkzeug 4 ist mindestens ein Sensor 7 und/oder 8 angeordnet, der ein die Stellung des Bodenbearbeitungswerkzeuges 4 während der Bearbeitung des Bodens definierendes Messsignal erzeugt. Dieses Messsignal wird periodisch sich wiederholend und zeitgleich zusammen mit einem von einem GPS 9 herrührenden Positionssignal erfasst. Hierfür ist eine Messeinrichtung 5 vorhanden, die sowohl den mindestens einen Sensor 7, 8 und Mittel zum Datenaustausch mit dem GPS 9 umfasst. Das Positionssignal des GPS 9, und das Messsignal des Sensors 7, 8 werden als einander zugeordnete Signale in einer Speichereinheit 6 gespeichert und stehen somit für eine spätere Verwendung erneut zur Verfügung. Durch diese Vorgehensweise wird es möglich, die Beschaffenheit des Bodens kartographisch aufzubereiten, abzuspeichern und dahingehend zu nutzen, dass bei einer zeitlich folgenden Bearbeitung des Bodens das Bearbeitungswerkzeug 4 rechtzeitig vor Erreichen eines Hindernisses im Boden angehoben werden kann, um dadurch einen Berührungskontakt mit dem Hindernis zu vermeiden und das Bearbeitungswerkzeug 4 auf diese Weise insgesamt zu schonen. Dadurch kann die Lebensdauer eines derartigen Bearbeitungswerkzeuges 4 erheblich gesteigert werden, da somit Beschädigungen auch kleineren Ausmaßes wirksam vermeidbar sind.

### BEZUGSZEICHENLISTE:

- 1: Bodenbearbeitungsgerät
- 2: Gelenk
- 3: Spannmittel
- 4: Bodenbearbeitungswerkzeug
- 5: Messeinrichtung
- 6: Speichereinheit
- 7: Sensor
- 8: Sensor
- 9: globales Positionserkennungssystem (GPS)
- 10: Messwertgeber (Lichtquelle)
- 11: optisches Signal (Laserstrahl)
- 12: Reflektor
- 13: Schleppfahrzeug (Traktor)
- 14: Rahmen
- 15: Scharträger
- 16: Walze
- 17: Flansch
- 18: Befestigungsschelle
- 19: Grubberschar

## Patentansprüche

1. Bodenbearbeitungsgerät (1) mit mehreren Bodenbearbeitungswerkzeugen (4), einer Messeinrichtung (5) und einer mit der Messeinrichtung (5) gekoppelten Speichereinheit (6) zur Speicherung und Verarbeitung der von der Messeinrichtung (5) stammenden Daten, **wobei** die Messeinrichtung (5) an mehreren oder jedem Bodenbearbeitungswerkzeug (4) angeordnete Sensoren (7, 8), deren Messsignale ein Maß für auf das Bodenbearbeitungswerkzeug (4) einwirkende Störgrößen sind und Mittel zum Datenaustausch mit einem globalen Positionserkennungssystem (GPS) (9) aufweist,
wobei jedes von den Sensoren (7, 8) erfasste Messsignal einem jeweils entsprechenden GPS-Signal zugeordnet und reproduzierbar in der Speichereinheit (6) gespeichert ist, und
wobei das Bodenbearbeitungsgerät (1) dafür ausgebildet ist, dass für eine Zusammenführung der erfassten Messsignale mit den GPS-Signalen eine Relativposition der einzelnen Bodenbearbeitungswerkzeuge (4) zu einer GPS-Antenne, die sich auf einem Schleppfahrzeug oder auf dem Bodenbearbeitungsgerät (1) befindet, einmalig festgelegt wird, und
wobei das Bodenbearbeitungsgerät (1) dafür ausgebildet ist, dass eine Kartierung einer bearbeiteten Fläche auf Grundlage der Relativposition und der Messsignale durchgeführt wird.

2. Bodenbearbeitungsgerät nach Anspruch 1, **dadurch gekennzeichnet, dass** die von den Sensoren (7, 8) erfassten Messsignale einer auf das Bodenbearbeitungswerkzeug (4) einwirkenden, vorzugsweise am Bodenbearbeitungswerkzeug (4) oder an einem Spannmittel (3) gemessenen Kraft und/oder einer Beschleunigung und/oder einer Geschwindigkeit und/oder einem von dem Bodenbearbeitungswerkzeug (4) beziehungsweise dem Spannmittel (3) zurückgelegten Weg entsprechen.

3. Bodenbearbeitungsgerät nach einem der vorstehend genannten Ansprüche, **dadurch gekennzeichnet, dass** die Sensoren (7, 8) mechanische, resistive, piezoelektrische, kapazitive, induktive, optische oder magnetische Sensoren sind.

4. Bodenbearbeitungsgerät nach einem der vorstehend genannten Ansprüche, **dadurch gekennzeichnet, dass** zur Datenübertragung zwischen Messeinrichtung (5) und Sensor (7, 8) und/oder zwischen Messeinrichtung (5) und Speichereinheit (6) und/oder zwischen Messeinrichtung (5) und GPS (9) wenigstens ein kabelfreies Datenübertragungssystem vorhanden ist.

5. Bodenbearbeitungsgerät nach einem der vorstehend genannten Ansprüche, **dadurch gekennzeichnet, dass** die für den Messvorgang durch den Sensor (7, 8) erforderliche Energie durch einen hierfür zuständigen Generator mittels Energy-Harvesting, vorzugsweise aus Vibrationsenergie und/oder thermischer Energie und/oder Sonnenenergie, gewonnen wird.

6. Bodenbearbeitungsgerät nach einem der vorstehend genannten Ansprüche, **dadurch gekennzeichnet, dass** das Bodenbearbeitungsgerät (1) ein Pflug oder Grubber ist.

7. Verfahren zur Erstellung einer Bodenkarte mit einem Bodenbearbeitungsgerät nach einem der vorstehend genannten Ansprüche, **dadurch gekennzeichnet, dass** an mehreren oder an jedem Bodenbearbeitungswerkzeug (4) eines Bodenbearbeitungsgerätes (1) vorhandene Sensoren (7, 8), deren Signale jeweils ein Maß für eine auf das Bodenbearbeitungswerkzeug (4) einwirkende Störgröße darstellen, Messsignale erzeugen, die periodisch sich wiederholend und zeitgleich zusammen mit einem von dem GPS (9) stammenden Positionssignal erfasst und diesem zugeordnet in der Speichereinheit (6) gespeichert werden,
wobei für eine Zusammenführung der erfassten Messsignale mit den GPS-Signalen eine Relativposition der einzelnen Bodenbearbeitungswerkzeuge (4) zu einer GPS-Antenne, die sich auf einem Schleppfahrzeug oder auf dem Bodenbearbeitungsgerät (1) befindet, einmalig festgelegt wird, und
wobei das Verfahren weiterhin eine Kartierung einer bearbeiteten Fläche auf Grundlage der Relativposition und der Messsignale umfasst.

8. Verfahren nach Anspruch 7, **dadurch gekennzeichnet, dass** die Messsignale nur dann erfasst und gespeichert werden, wenn die auf das Bodenbearbeitungswerkzeug (4) einwirkende und von der Messeinrichtung (5) erfasste Kraft und/oder das Drehmoment und/oder der Druck einen Schwellwert überschreitet.

9. Verfahren nach Anspruch 7 oder 8, **dadurch gekennzeichnet, dass** zur Ermittlung der Beschaffenheit des Bodens mittels des Positionssignals und des diesem zugeordneten Messsignals innerhalb der Speichereinheit (6) oder mit Hilfe der Speichereinheit (6) eine kartografische Darstellung des bearbeiteten Bodens erstellt und gespeichert wird.

10. Verfahren nach einem der Ansprüche 7 bis 9, **dadurch gekennzeichnet, dass** die in der Speichereinheit (6) gespeicherten Daten einer Messperiode als Referenzdaten für eine zu einem späteren Zeitpunkt mit dem Bodenbearbeitungsgerät (1) durchzuführende Bodenbearbeitung genutzt werden.

## Claims

1. A soil-cultivating implement (1) having a plurality of soil-cultivating tools (4), a measuring device (5) and a memory unit (6) which is coupled to the measuring device (5) and has the purpose of storing and processing the data originating from the measuring device (5), wherein the measuring device (5) has sensors (7, 8) arranged on a plurality of soil-cultivating tools (4) or on each soil-cultivating tool (4), the measurement signals of which are a measure of the interference variables acting on the soil-cultivating tool (4) and has means for exchanging data with a global position recognition system (GPS) (9),
wherein each measurement signal which is acquired by the sensors (7, 8) is assigned to a respectively corresponding GPS signal and stored in a reproducible fashion in the memory unit (6), and
wherein the soil-cultivating implement (1) is designed so that, for a merging of the acquired measurement signals with the GPS signals, a relative position of the individual soil-cultivation tools (4) to a GPS antenna, which is located on a towing vehicle or on the soil-cultivation implement (1), is determined once, and
wherein the soil-cultivating implement (1) is adapted to perform a mapping of a cultivated area based on the relative position and the measurement signals.

2. The soil-cultivating implement according to Claim 1, **characterized in that** the measurement signals which are acquired by the sensors (7, 8) correspond to a force which acts on the soil-cultivating tool (4) and is preferably measured at the soil-cultivating tool (4) or at a clamping means (3), and/or to an acceleration and/or a speed and/or to travel which is executed by the soil-cultivating tool (4) or the clamping means (3).

3. The soil-cultivating implement according to one of the preceding claims, **characterized in that** the sensors (7, 8) are mechanical, resistive, piezo-electric, capacitive, inductive, optical or magnetic sensors.

4. The soil-cultivating implement according to one of the preceding claims, **characterized in that** at least one cable-free data transmission system is present for transmitting data between the measuring device (5) and the sensor (7, 8) and/or between the measuring device (5) and the memory unit (6) and/or between the measuring device (5) and GPS (9).

5. The soil-cultivating implement according to one of the preceding claims, **characterized in that** the energy which is necessary for the measuring process by the sensor (7, 8) is obtained by means of a generator which is responsible for this, using energy harvesting, preferably from vibration energy and/or thermal energy and/or solar energy.

6. The soil-cultivating implement according to one of the preceding claims, **characterized in that** the soil-cultivating implement (1) is a plough or a grubber.

7. A method for producing a soil map with a soil-cultivating implement according to one of the preceding claims, **characterized in that** sensors (7, 8) which are present on a plurality of soil-cultivating tools (4) or on each soil-cultivating tool (4), of a soil-cultivating implement (1) and whose signals each constitute a measure of an interference variable which acts on the soil-cultivating tool (4), generate measurement signals which are acquired in a periodically recurring fashion and simultaneously together with a position signal which originates from the GPS (9) and are stored assigned thereto in the memory unit (6),
wherein for a merging of the acquired measurement signals with the GPS signals, a relative position of the individual soil-cultivation tools (4) to a GPS antenna which is located on a towing vehicle or on the soil-cultivation implement (1) is determined once, and
wherein the method further comprises a mapping of a cultivated area based on the relative position and the measurement signals.

8. The method according to claim 7, **characterized in that** the measurement signals are acquired and stored only when the force and/or the torque and/or the pressure which act on the soil-cultivating tool (4) and are acquired by the measuring device (5) exceed/exceeds a threshold value.

9. The method according to claim 7 or 8, **characterized in that** in order to determine the quality of the soil by means of the position signal and the measurement signal assigned thereto, a cartographic representation of the cultivated soil is produced and stored inside the memory unit (6) or using the memory unit (6).

10. The method according to one of claims 7 to 9, **characterized in that** the data, stored in the memory unit (6), of one measurement period are used as reference data for soil cultivation which is to be carried out with the soil-cultivating implement (1) at a later time.

## Revendications

1. Appareil destiné à travailler le sol (1) comportant une pluralité d'outils de travail du sol (4), un dispositif de mesure (5) et un module de mémoire (6) couplée au dispositif de mesure (5), destiné à mémoriser et à traiter les données en provenance du dispositif de mesure (5), dans lequel le dispositif de mesure (5) comporte des capteurs (7, 8) agencés sur une pluralité d'outils de travail du sol (4) ou sur chaque outil de travail du sol (4), les signaux de mesure desdits capteurs étant une mesure de variables de perturbation agissant sur l'outil de travail du sol (4), et des moyens pour échanger des données avec un système global d'identification de la position (GPS) (9),
dans lequel chaque signal de mesure détecté par les capteurs (7, 8) est associé à un signal GPS correspondant respectif et est stocké de manière reproductible dans le module de mémoire (6), et
dans lequel l'appareil destiné à travailler le sol (1) est conçu de telle sorte qu'une position relative des différents outils de travail du sol (4) par rapport à une antenne GPS, qui est située sur un véhicule de remorquage ou sur l'appareil destiné à travailler le sol (1), est déterminée une fois afin de combiner les signaux de mesure détectés avec les signaux GPS, et
dans lequel l'appareil destiné à travailler le sol (1) est conçu pour cartographier une surface cultivée sur la base de la position relative et des signaux de mesure.

2. Appareil destiné à travailler le sol selon la revendication 1, **caractérisé en ce que** les signaux de mesure détectés par les capteurs (7, 8) correspondent à une force agissant sur l'outil de travail du sol (4), mesurée de préférence sur l'outil de travail du sol (4) ou sur un moyen de serrage (3) et/ou à une accélération et/ou à une vitesse et/ou à un trajet parcouru par l'outil de travail du sol (4) ou le moyen de serrage (3).

3. Appareil destiné à travailler le sol selon l'une quelconque des revendications précédentes, **caractérisé en ce que** les capteurs (7, 8) sont des capteurs mécaniques, résistifs, piézoélectriques, capacitifs, inductifs, optiques ou magnétiques.

4. Appareil destiné à travailler le sol selon l'une quelconque des revendications précédentes, **caractérisé en ce qu'**au moins un système de transmission de données sans câble est prévu pour la transmission de données entre le dispositif de mesure (5) et le capteur (7, 8) et/ou entre le dispositif de mesure (5) et le module de mémoire (6) et/ou entre le dispositif de mesure (5) et le GPS (9).

5. Appareil destiné à travailler le sol selon l'une quelconque des revendications précédentes, **caractérisé en ce que** l'énergie nécessaire au processus de mesure par le capteur (7, 8) est obtenue par un générateur affecté à cela, au moyen d'une récupération d'énergie, de préférence à partir d'énergie vibratoire et/ou d'énergie thermique et/ou d'énergie solaire.

6. Appareil destiné à travailler le sol selon l'une quelconque des revendications précédentes, **caractérisé en ce que** l'appareil destiné à travailler le sol (1) est une charrue ou un cultivateur.

7. Procédé destiné à établir une carte du sol à l'aide d'un appareil destiné à travailler le sol selon l'une quelconque des revendications précédentes, **caractérisé en ce que** des capteurs (7, 8) présents sur plusieurs ou sur chaque outil de travail du sol (4) d'un appareil destiné à travailler le sol (1), dont les signaux représentent chacun une mesure d'une grandeur perturbatrice agissant sur l'outil de travail de sol (4), génèrent des signaux de mesure qui sont détectés de façon périodiquement répétitive et simultanément avec un signal de position émanant du GPS (9) et, associés à ce dernier, sont mémorisés dans le module de mémoire (6),
dans lequel, pour combiner les signaux de mesure détectés avec les signaux GPS, une position relative des outils individuels de culture du sol (4) par rapport à une antenne GPS, qui est située sur un véhicule tracteur ou sur l'appareil destiné à travailler le sol (1), est déterminée une fois, et
dans lequel le procédé comprend en outre une cartographie d'une surface travaillée sur la base de la position relative et des signaux de mesure.

8. Procédé selon la revendication 7, **caractérisé en ce que** les signaux de mesure ne sont détectés et mémorisés que si la force et/ou le couple et/ou la pression agissant sur l'outil de travail du sol (4) et détectée par le dispositif de mesure (5) dépassent une valeur de seuil.

9. Procédé selon la revendication 7 ou 8, **caractérisé en ce qu'**une représentation cartographique du sol travaillé est établie et stockée au sein du module de mémoire (6) ou à l'aide du module de mémoire (6) pour déterminer la nature du sol au moyen du signal de position et du signal de mesure qui lui est associé.

10. Procédé selon l'une quelconque des revendications 7 à 9, **caractérisé en ce que** les données d'une période mesure mémorisées dans le module de mémoire (6) sont utilisées en tant que données de référence pour un travail du sol qui doit être réalisé ultérieurement avec l'appareil destiné à travailler le sol (1).
